# EUROPÄISCHE PATENTSCHRIFT

(11) **EP 3 191 889 B1**
(45) Veröffentlichungstag und Bekanntmachung des Hinweises auf die Patenterteilung: **03.10.2018**
(21) Anmeldenummer: 15719965.4
(22) Anmeldetag: 24.04.2015
(51) Int. Cl.: G02F 1/13, G06K 9/00, B60Q 1/14, B60J 3/04, F21Y 113/00, F21S 41/14, F21S 41/16, G02B 27/01

(54) **VERFAHREN ZUM BELEUCHTEN EINES UMGEBUNGSBEREICHES EINES KRAFTFAHRZEUGS UND KRAFTFAHRZEUG**
METHOD FOR ILLUMINATING A SURROUNDING REGION OF A MOTOR VEHICLE, AND MOTOR VEHICLE
PROCÉDÉ D'ÉCLAIRAGE D'UNE ZONE PÉRIPHÉRIQUE D'UN VÉHICULE AUTOMOBILE ET VÉHICULE AUTOMOBILE

(30) Priorität: 13.09.2014 DE 102014013584
(43) Veröffentlichungstag der Anmeldung: 19.07.2017
(73) Patentinhaber: Audi AG, 85045 Ingolstadt (DE)
(72) Erfinder: GUT, Carsten, 85051 Ingolstadt (DE); BERLITZ, Stephan, 86529 Schrobenhausen (DE); THOMAS, Werner, 85055 Ingolstadt (DE)
(74) Vertreter: Thielmann, Frank
(86) Internationale Anmeldenummer: PCT/EP2015/000849
(87) Internationale Veröffentlichungsnummer: WO 2016/037671

(56) Entgegenhaltungen:
- EP-A2- 2 772 682
- WO-A1-99/62732
- DE-A1- 19 933 397
- DE-A1-102012 003 158
- FR-A1- 2 988 333
- FR-A5- 2 032 660

## Beschreibung

Die Erfindung betrifft ein Verfahren zum Beleuchten eines Umgebungsbereiches eines Kraftfahrzeugs durch eine fahrzeugseitige Abstrahlung zumindest eines Lichtstrahles auf eine Ablenkeinrichtung des Kraftfahrzeugs und ein zeitgesteuertes Ablenken des Lichtstrahls in den Umgebungsbereich des Kraftfahrzeugs mittels der Ablenkeinrichtung zur Ausleuchtung des gesamten Umgebungsbereiches, wobei die Ablenkeinrichtung den Lichtstrahl zu jeweils einem vorbestimmten Zeitpunkt auf jeweils eine vorbestimmte Stelle des Umgebungsbereiches ablenkt. Die Erfindung betrifft außerdem ein Kraftfahrzeug.

Es ist bekannt, dass mit Scheinwerfern eines Kraftfahrzeugs bereits viele Lichtfunktionen im Abblendlicht und im Fernlicht umgesetzt werden können. Diese Funktionen sollen den Fahrer des Kraftfahrzeugs unterstützen und die Sicherheit im Straßenverkehr erhöhen. So ist beispielsweise aus der DE 10 2012 003 158 A1 ein Verfahren bekannt, bei welchem ein Laserlichtbild in eine Umgebung eines Fahrzeugs projiziert wird. Dabei können die durch die Lichtfunktionen hervorgerufenen Änderungen in der Lichtverteilung des Abblendlichts und des Fernlichts nicht nur der Fahrzeugführer, sondern auch andere Verkehrsteilnehmer, beispielsweise Fahrer entgegenkommender Fahrzeuge, wahrnehmen. Daraus ergibt sich der Nachteil, dass diese Änderungen andere Verkehrsteilnehmer ablenken und somit zu einer Gefährdung führen können. Außerdem müssen die Lichtfunktionen Regelungen (ECE- Economic Comission for Europe /SAE- Society of Automotive Engineers/ CCC- China Compulsory Certification) und gesetzliche Anforderungen einhalten. Durch diese Randbedingungen wird die Anzahl an Lichtfunktionen stark eingeschränkt.

Aus dem Stand der Technik sind außerdem Vorrichtungen und Verfahren bekannt, mittels welchen die Blenderscheinungen von Fahrzeugführern reduziert werden können. Solche Vorrichtungen und Verfahren sind beispielsweise in der DE 39 16 897 A1, in der DE 10 2004 011 020 B4 und in der DE 101 34 770 A1 beschrieben. Ziel der Verfahren gemäß dem Stand der Technik ist es, das durch einen Fahrzeugführer wahrnehmbare Scheinwerferlicht anderer Fahrzeuge zu reduzieren, während hingegen das Licht des eigenen Kraftfahrzeugs voll vom Fahrzeugführer wahrgenommen werden kann.

Es ist Aufgabe der vorliegenden Erfindung, ein Verfahren bereitzustellen, welches einen Fahrer eines Kraftfahrzeugs mit Hilfe von Lichtfunktionen im Straßenverkehr unterstützt.

Diese Aufgabe wird erfindungsgemäß durch ein Verfahren sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Die Erfindung betrifft ein Verfahren zum Beleuchten eines Umgebungsbereiches eines Kraftfahrzeugs. Das Verfahren umfasst eine fahrzeugseitige Abstrahlung zumindest eines Lichtstrahles auf eine Ablenkeinrichtung des Kraftfahrzeugs und ein zeitgesteuertes Ablenken des Lichtstrahls in den Umgebungsbereich des Kraftfahrzeugs mittels der Ablenkeinrichtung zur Ausleuchtung des gesamten Umgebungsbereiches, wobei die Ablenkeinrichtung den Lichtstrahl zu jeweils einem vorbestimmten Zeitpunkt auf jeweils eine vorbestimmte Stelle des Umgebungsbereiches ablenkt. Der Lichtstrahl kann beispielsweise von einer Lichtquelle in einem der Scheinwerfer des Kraftfahrzeugs abgestrahlt werden. Die Ablenkeinrichtung kann ebenfalls in den Scheinwerfer integriert sein und z.B. einen verschwenkbaren Spiegel umfassen.

Erfindungsgemäß ist es vorgesehen, dass eine zwischen dem Umgebungsbereich und einem Fahrzeuginsassen bereitgestellte optische Einrichtung zur Erzeugung eines, nur für den Fahrzeuginsassen sichtbaren, vorbestimmten Beleuchtungsmusters oder einer Lichtfunktion in dem Umgebungsbereich vorgesehen ist, die zu zumindest einem der Zeitpunkte eine Transmission eines aus dem Umgebungsbereich zurück zum Fahrzeuginsassen reflektierten Teils des Lichtstrahls blockiert, sodass jede zugehörige Stelle für den Fahrzeuginsassen unbeleuchtet erscheint und die übrigen Stellen beleuchtet erscheinen. Mit anderen Worten bedeutet dies, dass das Beleuchtungsmuster oder die Lichtfunktion nur für einen oder mehrerer Fahrzeuginsassen, nicht aber für eine oder mehrere Personen außerhalb der Fahrzeugs, sichtbar ist. Beispielsweise kann der Fahrer und/oder eine andere Peron innerhalb des Kraftfahrzeugs eine Shutter-Brille tragen, die zeitweise dunkel geschaltet wird und zeitweise transparent geschaltet wird. Eine solche Brille, welche eine Lichtintensität reduziert, ist beispielsweise aus der WO 96/41231 A1 bekannt. Ein Beleuchtungsmuster oder eine solche Lichtfunktion kann beispielsweise ein Zeichen oder eine Markierung sein, welche in dem Umgebungsbereich, beispielsweise auf der Straße, auf welcher sich das Kraftfahrzeug fortbewegt, erzeugt wird. Dabei ist das Zeichen oder die Markierung derart gestaltet, dass nur das Zeichen oder die Markierung im Umgebungsbereich unbeleuchtet erscheint, während hingegen der restliche Umgebungsbereich beleuchtet erscheint. Somit kann das Beleuchtungsmuster, beispielsweise ein Pfeil, auf der durch den Lichtstrahl beleuchteten Straße erzeugt werden, indem vorbestimmte Stellen in Form des Beleuchtungsmusters, also des Pfeils, auf der Straße gezielt für den Fahrzeuginsassen ausgeblendet und somit abgedunkelt werden. Dabei erscheinen diese Stellen nur für den Fahrzeuginsassen unbeleuchtet, da die optische Einrichtung zwischen dem Fahrzeuginsassen und dem Umgebungsbereich des Kraftfahrzeugs angeordnet ist. Die optische Einrichtung stoppt zu denjenigen Zeitpunkten, an welchen die Ablenkeinrichtung den Lichtstrahl auf die vorbestimmten Stellen ablenkt, die Transmission des an den vorbestimmten Stellen reflektierten Teils des Lichtstrahls zu dem Fahrzeuginsassen. Durch das Verfahren kann also eine Markierungslichtfunktion insbesondere im Abblendlicht des Kraftfahrzeugs umgesetzt werden, welche nur für den Fahrzeuginsassen, beispielsweise den Fahrer des Kraftfahrzeugs, sichtbar ist. Insbesondere sehen andere, fahrzeugexterne Verkehrsteilnehmer alle Stellen von den Lichtstrahlen beleuchtet. Zusätzlich können diese Lichtfunktionen beispielsweise unabhängig von Regelungen umgesetzt werden, da die gesetzlichen Anforderungen trotzdem erfüllt werden können.

Dabei ermittelt eine Steuereinrichtung zur Erzeugung des Beleuchtungsmusters in der Umgebung eine abzudunkelnde Stelle und zu dieser abzudunkelnden Stelle einen Auslösezeitpunkt für die optische Einrichtung. Die Ablenkeinrichtung wiederholt das Ablenken zyklisch und die Steuereinrichtung ermittelt den aktuellen Zeitpunkt innerhalb des Zyklus und vergleicht den aktuellen Zeitpunkt mit dem Auslösezeitpunkt. Bei einer Übereinstimmung des aktuellen Zeitpunktes mit dem Auslösezeitpunkt wird ein Steuersignal für die optische Einrichtung erzeugt, bei welchem die Transmission blockiert wird. Mit anderen Worten bedeutet dies, dass die Steuereinrichtung, welche beispielsweise im Scheinwerfer des Kraftfahrzeugs angeordnet sein kann, diejenigen abzudunkelnden oder auszublendenden Stellen im Umgebungsbereich erfasst, welche für das Beleuchtungsmuster formgebend sind. Dabei soll die optische Einrichtung genau dann die Transmission des reflektierten Teils des Lichtstrahls blockieren, also Auslösen, wenn die Ablenkeinrichtung den Lichtstrahl auf die von der Steuereinrichtung erfassten abzudunkelnden Stellen ablenkt. Da die Ablenkeinrichtung das Ablenken zyklisch, also zu definierten Zeitpunkten, wiederholt, kann von der Steuereinrichtung ermittelt werden, zu welchem der definierten Zeitpunkte die Ablenkeinrichtung den Lichtstrahl auf die abzudunkelnden Stellen ablenkt. Diese Zeitpunkte werden als Auslösezeitpunkte für die optische Einrichtung festgelegt. Die Steuereinrichtung erfasst den aktuellen Zeitpunkt der Ablenkeinrichtung und vergleicht ihn mit dem Auslösezeitpunkt. Falls der aktuelle Zeitpunkt innerhalb einer jeden zyklischen Wiederholung, also der aktuellen Phase innerhalb des Zyklus, mit dem von der Steuereinrichtung ermittelten Auslösezeitpunkt übereinstimmt, wird die optische Einrichtung angesteuert, um die Transmission des an der abzudunkelnden Stelle reflektierten Teils des Lichtstrahls zu blockieren. Es wird also der Scheinwerfer, insbesondere die Steuereinrichtung, mit der optischen Einrichtung synchronisiert. Somit können Lichtfunktionen umgesetzt werden, die nur vom Nutzer der optischen Einrichtung, also vom Fahrzeuginsassen, wahrgenommen werden können. Andere Verkehrsteilnehmer ohne die synchronisierte optische Einrichtung können diese Funktionen nicht wahrnehmen und somit nicht abgelenkt werden.

Besonders bevorzugt wird der Lichtstrahl zeilenförmig und/oder spaltenförmig von der Ablenkeinrichtung abgelenkt. Der Lichtstrahl kann mit der Ablenkeinrichtung beliebig nach Art eines aus dem Stand der Technik bekannten Laserscanners abgelenkt werden. Dabei ist eine Frequenz, mit der die Ablenkeinrichtung betrieben wird, so gewählt, dass die Ablenkung des Lichtstrahls mit dem menschlichen Auge nicht wahrnehmbar ist. Eine Scanbewegung wird dabei erzeugt, indem die Orientierung der Ablenkeinrichtung verändert wird. Die Orientierung kann dabei entlang einer ersten Achse, beispielsweise entlang einer Zeile, oder entlang einer zweiten Achse, beispielsweise entlang einer Spalte, verändert werden. Die Orientierung kann aber auch entlang der ersten und der zweiten Achse, also rasterförmig, verändert werden.

Vorzugsweise wird die Ablenkeinrichtung zum Ablenken des Lichtstrahls quasistatisch oder resonant angetrieben. Beim quasistatischen Antrieb wird die Orientierung der Ablenkeinrichtung zu diskreten Zeitpunkten, also sprunghaft, verändert, sodass die Ablenkeinrichtung in einer Orientierung für ein vorbestimmtes Zeitintervall quasistatisch verweilt. Beim resonanten Antrieb führt die Ablenkeinrichtung eine resonante Drehschwingung durch.

In einer Ausführungsform wird als Ablenkeinrichtung zumindest ein drehbar gelagerter Mikrospiegel bereitgestellt. Somit kann durch den Mikrospiegel der Lichtstrahl beispielsweise in mehreren Achsen resonant oder quasistatisch abgelenkt werden.

In einer vorteilhaften Ausgestaltung wird der zumindest eine Lichtstrahl, welcher auf die Ablenkeinrichtung gestrahlt wird, mittels einer blauen Laserdiode und einer roten Laserdiode und einer grünen Laserdiode erzeugt. Der Lichtstrahl entspricht somit einem Laserstrahl. Dabei werden das Licht der blauen Laserdiode, das Licht der roten Laserdiode und das Licht der grünen Laserdiode vermischt, sodass das entstehende Licht weiß erscheint.

Es erweist sich als vorteilhaft, wenn der Lichtstrahl, welcher auf die Ablenkeinrichtung gestrahlt wird, mittels einer blauen Laserdiode erzeugt wird, insbesondere mit einer nur blauen Laserdiode, wobei die Ablenkeinrichtung den blauen Lichtstrahl bzw. Laserstrahl auf ein Wandlerelement, einen sogenannten Konverter, lenkt, welches den Laserstrahl, insbesondere mittels eines photolumineszierenden Materials, in breitbandiges Licht umwandelt. Der Laserstrahl wird also über den Konverter geführt. Blaue Laserdiode haben einen besonders hohen Wirkungsgrad. Durch die Kombination mit dem photolumineszierenden Material, einer sogenannten Lumineszenzschicht, kann somit besonders gut breitbandiges, insbesondere weißes, Licht erzeugt werden.

Bevorzugt blockiert die optische Einrichtung die Transmission des Lichtes mittels einer in die optische Einrichtung integrierten Flüssigkristallfläche, welche elektronisch zwischen lichtdurchlässig und lichtundurchlässig umschaltbar ist. Alternativ oder zusätzlich kann ein anderes elektrochromes Material vorgesehen sein.

Eine Ausgestaltung sieh vor, dass als optische Einrichtung eine Brille für den Fahrzeuginsassen bereitgestellt wird, welche z.B. die Flüssigkristallfläche aufweist, oder dass als optische Einrichtung ein optisches Element mit der Flüssigkristallfläche bereitgestellt wird, welches in eine Windschutzscheibe des Kraftfahrzeugs integriert ist. Es kann also als optische Einrichtung ein sogenanntes Shuttersystem bereitgestellt werden, welches beispielsweise als aktive Brille (Shutterbrille) oder als "schaltbare Scheibe" ausgeführt sein kann. Eine Shutterbrille kann beispielsweise äußerst energiesparend mit einer Knopfzelle betrieben werden. Das Shuttersystem kann auf besonders einfache Weise angesteuert werden, um zu definierten Zeitpunkten die Transmission von Licht durch das Shuttersystem zu stoppen. Durch diese Abschattung des Shuttersystems können einzelne Stellen oder Bereiche im Umgebungsbereich gezielt ausgeblendet werden.

Die Erfindung betrifft außerdem ein Kraftfahrzeug mit einer Lichtquelle zur Abstrahlung des Lichtstrahls, einer zeitgesteuerten Ablenkeinrichtung und einer Steuereinrichtung, welche dazu ausgelegt ist, eine optische Einrichtung gemäß einer Ausführungsform des erfindungsgemäßen Verfahrens anzusteuern, um die optische Einrichtung mit der zeitgesteuerten Ablenkeinrichtung zeitlich zu synchronisieren. Zur Erzeugung des Beleuchtungsmusters in dem Umgebungsbereich ist die Steuereinrichtung dazu ausgelegt, in dem Umgebungsbereich eine abzudunkelnde Stelle und zu dieser abzudunkelnden Stelle einen Auslösezeitpunkt für die optische Einrichtung sowie den aktuellen Zeitpunkt der Ablenkeinrichtung, welche das Ablenken zyklisch wiederholt, zu ermitteln und mit dem Auslösezeitpunkt zu vergleichen. Bei einer Übereinstimmung des aktuellen Zeitpunktes mit dem Auslösezeitpunkt wird von der Steuereinrichtung ein Steuersignal für die optische Einrichtung erzeugt, durch welches eine Transmission eines aus dem Umgebungsbereich zurück zum Fahrzeuginsassen reflektierten Teils des Lichtstrahls blockierbar ist. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Kraftfahrzeug.

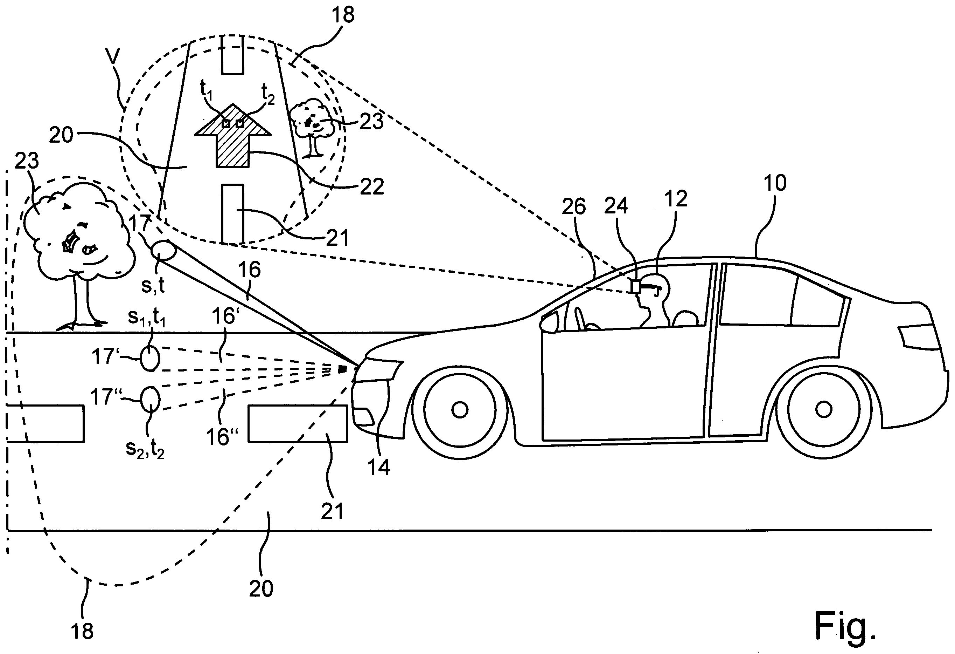

Im Folgenden wird die Erfindung nun anhand eines bevorzugten Ausführungsbeispiels, wie auch unter Bezugnahme auf die beigefügte Zeichnung näher erläutert.

Es zeigt die einzige Figur (Fig.) eine schematische Darstellung eines Kraftfahrzeugs und einer optischen Einrichtung, anhand welcher eine Ausführungsform des erfindungsgemäßen Verfahren näher beschrieben wird.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Kraftfahrzeug 10. Im Innenraum des Kraftfahrzeugs 10 kann ein Fahrzeuginsasse 12, beispielsweise der Fahrer des Kraftfahrzeugs 10, sitzen. Das Kraftfahrzeug 10 weist einen Scheinwerfer 14 auf, aus welchem ein Lichtstrahl 16 abgestrahlt wird. Der Lichtstrahl 16 kann als Laserstrahl ausgeführt sein, welcher über ein Wandlerelement (hier nicht dargestellt) geführt und in breitbandiges, insbesondere weißes, Licht umgewandelt werden kann. Der Lichtstrahl 16, insbesondere ein Lichtspot 17 des Lichtstrahls 16, trifft dabei an einem bestimmten Zeitpunkt t auf eine bestimmte Stelle s in einem Umgebungsbereich 18 des Kraftfahrzeugs 10 und beleuchtet diese Stelle s.

Der Scheinwerfer 14 ist insbesondere als scannender Scheinwerfer 14 ausgeführt. Dabei wird der Lichtstrahl 16 mittels einer Ablenkeinrichtung (hier nicht dargestellt), welche in dem Scheinwerfer 14 angeordnet sein kann, zeitgesteuert abgelenkt. Die Ablenkeinrichtung kann als Mikrospiegel und/oder als schwenkbarer Spiegel ausgestaltet sein. Die Ablenkung zu unterschiedlichen Zeitpunkten t1, t2 ist in der Figur exemplarisch mittels der Lichtstrahlen 16' und 16" visualisiert. Der Lichtspot 17' des Lichtstrahls 16' beleuchtet die Stelle s1 in dem Umgebungsbereich 18 und der Lichtspot 17" des Lichtstrahls 16" beleuchtet die Stelle s2 in dem Umgebungsbereich 18. Dabei entspricht der Lichtstrahl 16' dem abgelenkten Lichtstrahl 16, welcher zu einem Zeitpunkt t1 die Stelle s1 beleuchtet. Der Lichtstrahl 16" entspricht dem abgelenkten Lichtstrahl 16, welcher zu einem Zeitpunkt t2 die Stelle s2 beleuchtet. Die Stellen s1 und s2 sind hier Stellen auf einer Straße 20, auf welcher sich der Fahrzeuginsasse 12 mit seinem Kraftfahrzeug 10 fortbewegt. Mittels der Ablenkung des Lichtstrahls 16 kann der gesamte Umgebungsbereich 18 ausgeleuchtet werden. Somit sind hier für den Fahrzeuginsassen 12 die Straße 20, Markierungen 21 auf der Straße 20 und ein Baum 23 am Rand der Straße 20 beleuchtet und somit sichtbar. Die Zyklusdauer kann z.B. kleiner als 1/20 Sekunde sein. Die Ablenkung des Lichtstrahls 16 kann zyklisch erfolgen und ist insbesondere für den Fahrzeuginsassen 12 nicht sichtbar. Die Ablenkung kann dabei zeilen- und/oder spaltenförmig erfolgen. Der Lichtspot 17 befindet sich also zu einem bestimmten und definierten Zeitpunkt t an einer bestimmten und definierten Stelle s, wodurch jedem Zeitpunkt t eine Stelle s bzw. jeder Stelle s zumindest ein Zeitpunkt t zugeordnet werden kann .

Um nun ein Beleuchtungsmuster 22 im Umgebungsbereich 18 zu erzeugen, welches nur für den Fahrzeuginsassen 12 sichtbar ist, wird eine optische Einrichtung 24 bereitgestellt. Die optische Einrichtung 24 ist hier z.B. als Shutterbrille ausgebildet, welche der Fahrzeuginsasse 12 trägt. Es ist aber auch denkbar, ein Shutter-System im Sichtfeld des Fahrzeuginsassen 12 zu platzieren, beispielsweise als "schaltbare Scheibe" in einer Windschutzscheibe 26 des Kraftfahrzeugs 10. Das optische System 24 ist elektronisch ansteuerbar und kann somit zwischen lichtundurchlässig und lichtdurchlässig umgeschaltet werden. Während die optische Einrichtung 24 lichtdurchlässig geschaltet ist, kann Umgebungslicht, insbesondere ein im Umgebungsbereich 18 reflektierter Teil des Lichtstrahls 16, 16', 16", zum Fahrzeuginsassen 12 transmittiert werden. Während die optische Einrichtung 24 lichtundurchlässig geschaltet ist, kann eine Transmission von Umgebungslicht, insbesondere von einem im Umgebungsbereich 18 reflektierten Teil des Lichtstrahls 16, 16', 16", zum Fahrzeuginsassen 12 blockiert werden.

Zur Erzeugung des Beleuchtungsmusters 22 wird der Umgebungsbereich 18 ausgeleuchtet, wobei diejenigen Stellen, welche für das Beleuchtungsmuster 22 formgebend sind, gezielt mittels der optischen Einrichtung 24 für den Fahrzeuginsassen 12 ausgeblendet oder abgeschattet werden. Das bedeutet, dass diese Stellen im Umgebungsbereich 18 für den Fahrzeuginsassen 12 unbeleuchtet erscheinen. Um für einen definierten Zeitpunkt die Transmission von Licht durch die Shutterbrille zu stoppen, kann beispielsweise eine Steuereinrichtung (hier nicht dargestellt) zum Ansteuern der Shutterbrille bereitgestellt werden. Die Steuereinrichtung kann in den Scheinwerfer 14 integriert sein. Die Steuereinrichtung ermittelt die zur Erzeugung des Beleuchtungsmusters 22 notwendigen Stellen im Umgebungsbereich 18. Außerdem ermittelt die Steuereinrichtung die zu den Stellen korrespondierenden Auslösezeitpunkte, bei welchen die optische Einrichtung 24 lichtundurchlässig geschaltet werden soll, sodass eine Transmission des an diesen Stellen reflektierten Teils des Lichtstrahls 16 blockiert werden kann. Exemplarisch sind hier zwei Stellen des Beleuchtungsmusters 22, nämlich die Stellen s1 und s2, dargestellt. Zu den Stellen s1 und s2 korrespondieren die Zeitpunkte t1 und t2. Um nun also beispielsweise die Stelle s1 für den Fahrzeuginsassen 12 auszublenden, sodass sie unbeleuchtet erscheint, soll die optische Einrichtung 24 zum Zeitpunkt t1 lichtundurchlässig geschaltet werden. Wenn entsprechend die Stelle s2 ausgeblendet werden soll, wird die optische Einrichtung 24 zum Zeitpunkt t2 lichtundurchlässig geschaltet. Der Scheinwerfer 14, insbesondere die Steuereinrichtung, wird also mit der optischen Einrichtung 24 synchronisiert. Eine Synchronisation kann beispielsweise über Bluetooth und ein fahrzeugseitiges Bussystem realisiert werden.

Mittels der Synchronisation ergibt sich für den Fahrzeuginsassen 12 eine Ansicht V, in welcher der Umgebungsbereich 18 ausgeleuchtet ist, während das Beleuchtungsmuster 22, welches hier in Form eines Pfeils auf der Straße 20 dargestellt ist, für den Fahrzeuginsassen 12 unbeleuchtet erscheint. Der Fahrzeuginsasse 12 sieht also die Straße 20, die Markierungen 21 auf der Straße, den Baum 23 am Rand der Straße 20 und das Beleuchtungsmuster 22 als abgedunkelte Form auf der Straße 20.

Mittels des Ausführungsbeispiels sind also virtuelle Lichtfunktionen strahlgeführter Scheinwerfersysteme gezeigt/realisiert.

## Patentansprüche

1. Verfahren zum Beleuchten eines Umgebungsbereiches (18) eines Kraftfahrzeugs (10) durch eine fahrzeugseitige Abstrahlung zumindest eines Lichtstrahles (16, 16', 16") auf eine Ablenkeinrichtung des Kraftfahrzeugs (10) und ein zeitgesteuertes Ablenken des Lichtstrahls (16, 16', 16") in den Umgebungsbereich (18) des Kraftfahrzeugs (10) mittels der Ablenkeinrichtung zur Ausleuchtung des gesamten Umgebungsbereiches (18), wobei die Ablenkeinrichtung den Lichtstrahl (16, 16', 16") zu jeweils einem vorbestimmten Zeitpunkt (t) auf jeweils eine vorbestimmte Stelle (s) des Umgebungsbereiches (18) ablenkt,
**dadurch gekennzeichnet, dass**
eine zwischen dem Umgebungsbereich (18) und einem Fahrzeuginsassen (12) bereitgestellte optische Einrichtung (24) zur Erzeugung eines, nur für den Fahrzeuginsassen (12) sichtbaren, vorbestimmten Beleuchtungsmusters (22) in dem Umgebungsbereich (18) zu zumindest einem der Zeitpunkte (t1, t2) eine Transmission eines aus dem Umgebungsbereich (18) zurück zum Fahrzeuginsassen (12) reflektierten Teils des Lichtstrahls (16, 16', 16") blockiert, sodass jede zugehörige Stelle (s1, s2) für den Fahrzeuginsassen (12) unbeleuchtet erscheint und die übrigen Stellen beleuchtet erscheinen, wobei zur Erzeugung des Beleuchtungsmusters (22) eine Steuereinrichtung in dem Umgebungsbereich (18) eine abzudunkelnde Stelle (s1, s2) und zu dieser abzudunkelnden Stelle (s1,s2) einen Auslösezeitpunkt (t1, t2) für die optische Einrichtung (24) sowie den aktuellen Zeitpunkt (t) der Ablenkeinrichtung, welche das Ablenken zyklisch wiederholt, ermittelt und mit dem Auslösezeitpunkt (t1, t2) vergleicht und bei einer Übereinstimmung des aktuellen Zeitpunktes (t) mit dem Auslösezeitpunkt (t1, t2) ein Steuersignal für die optische Einrichtung (24) erzeugt, bei welchem die Transmission blockiert wird.

2. Verfahren nach Anspruch 1,
**dadurch gekennzeichnet, dass**
der Lichtstrahl (16, 16', 16") zeilenförmig und/oder spaltenförmig von der Ablenkeinrichtung abgelenkt wird.

3. Verfahren nach Anspruch 2,
**dadurch gekennzeichnet, dass**
die Ablenkeinrichtung zum Ablenken des Lichtstrahls (16, 16', 16") quasistatisch oder resonant angetrieben wird.

4. Verfahren nach einem der vorhergehenden Ansprüche,
**dadurch gekennzeichnet, dass**
als Ablenkeinrichtung zumindest ein drehbar gelagerter Mikrospiegel bereitgestellt wird.

5. Verfahren nach einem der vorhergehenden Ansprüche,
**dadurch gekennzeichnet, dass**
der Lichtstrahl (16, 16', 16"), welcher auf die Ablenkeinrichtung gestrahlt wird, mittels einer blauen Laserdiode und einer roten Laserdiode und einer grünen Laserdiode erzeugt wird.

6. Verfahren nach einem der vorhergehenden Ansprüche,
**dadurch gekennzeichnet, dass**
dass der Lichtstrahl (16, 16', 16"), welcher auf die Ablenkeinrichtung gestrahlt wird, mittels einer blauen Laserdiode erzeugt wird, wobei die Ablenkeinrichtung den blauen Lichtstrahl auf ein Wandlerelement lenkt, welches den blauen Lichtstrahl insbesondere mittels eines photolumineszierenden Materials in breitbandiges Licht umwandelt.

7. Verfahren nach einem der vorhergehenden Ansprüche,
**dadurch gekennzeichnet, dass**
die optische Einrichtung (24) die Transmission des Lichtes mittels einer in die optische Einrichtung (24) integrierten Flüssigkristallfläche, welche elektronisch zwischen lichtdurchlässig und lichtundurchlässig umschaltbar ist, blockiert.

8. Verfahren nach einem der vorhergehenden Ansprüche,
**dadurch gekennzeichnet, dass**
als optische Einrichtung (24) eine Brille für den Fahrzeuginsassen (12) bereitgestellt wird, welche die Flüssigkristallfläche aufweist, oder dass als optische Einrichtung (24) ein optisches Element mit der Flüssigkristallfläche bereitgestellt wird, welches in eine Windschutzscheibe (26) des Kraftfahrzeugs (10) integriert ist.

9. Kraftfahrzeug (10) mit einer Lichtquelle zur Abstrahlung des Lichtstrahls (16, 16', 16"), einer zeitgesteuerten Ablenkeinrichtung und einer Steuereinrichtung, welche dazu ausgelegt ist, eine optische Einrichtung (24) anzusteuern, um die optische Einrichtung (24) mit der zeitgesteuerten Ablenkeinrichtung zeitlich zu synchronisieren, **dadurch gekennzeichnet, dass** zur Erzeugung eines Beleuchtungsmusters (22) in einem Umgebungsbereich (18) die Steuereinrichtung dazu ausgelegt ist, in dem Umgebungsbereich (18) eine abzudunkelnde Stelle (s1, s2) und zu dieser abzudunkelnden Stelle (s1,s2) einen Auslösezeitpunkt (t1, t2) für die optische Einrichtung (24) sowie den aktuellen Zeitpunkt (t) der Ablenkeinrichtung, welche das Ablenken zyklisch wiederholt, zu ermitteln und mit dem Auslösezeitpunkt (t1, t2) zu vergleichen und bei einer Übereinstimmung des aktuellen Zeitpunktes (t) mit dem Auslösezeitpunkt (t1, t2) ein Steuersignal für die optische Einrichtung (24) zu erzeugen, bei welchem eine Transmission eines aus dem Umgebungsbereich (18) zurück zum Fahrzeuginsassen (12) reflektierten Teils des Lichtstrahls (16, 16', 16") blockierbar ist.

## Claims

1. Method of illuminating a peripheral region (18) of a motor vehicle (10) by a vehicle-side radiation of at least one light beam (16, 16 ', 16 ") onto a deflection device of the motor vehicle (10) and by a time-controlled deflection of the light beam (16, 16', 16 ") in the peripheral region (18) of the motor vehicle (10) by means of the deflection device for illumination of the entire peripheral region (18), wherein the deflector direction of the light beam (16, 16 ', 16") deflects at a predetermined time (t) on a predetermined location (s) of the peripheral area (18),
**characterized in that**,
there is an optical device (24) between the peripheral region (18) and a vehicle occupant (12) for generating a Visible, predetermined illumination pattern (22) in the peripheral region (18) and only visible to the occupant (12), there is a transmission at at least one of the time points (t1, t2) of a reflected part of a light beam (16, 16, 16") from the peripheral region (18) reflected back to the occupants (12) which is blocked, so that any associated point (s1, s2) appears non-illuminated to the vehicle occupants (12) and the other points appear illuminated, whereby for the creation of the illumination pattern (22), there is a control unit in the peripheral region
(18) creating a point to be darkened (s1, s2) and at this darkened point (s1, s2) there is a trigger time (t1, t2) for the optical device (24) as well as the current time point (t) of the deflector, which repeats the deflecting cyclically, and creates a control signal for the optical device (24) with the trigger point (t1, t2) and when consistent with the current time (t), at which transmission is blocked.

2. Method according to claim 1, **characterized in that**, the light beam (16, 16 ', 16 ") is deflected in a linear and/or columnar form by the deflection device.

3. Method according to claim 2 **characterized in that**, the deflecting device for deflecting the light beam (16, 16', 16") is quasi-statically or resonantly driven.

4. Method according to one of the previous claims, **characterized in that**, at least one rotatable micro mirror is provided as deflector.

5. Method according to one of the previous claims, **characterized in that**, the light beam (16, 16', 16 "), which is irradiated to the deflector, is produced by a blue laser diode, a red diode laser and a green laser diode.

6. Method according to one of the previous claims, **characterized in that**, that the light beam (16, 16 ', 16 "), which is irradiated to the deflector, is produced by a blue laser diode, whereby the deflector directs the blue light beam to a transducer element which converts the blue light beam into broadband light, in particular by means of a photoluminescing material.

7. Method according to one of the preceding claims, **characterized in that**, said optical device (24) blocks the transmission of light by means of a liquid crystal surface integrated into the optical device (24), which is electronically switchable between light transmissive and opaque.

8. Method according to one of the previous claims, **characterized in that**, a pair of glasses is used as optical device (24) for the vehicle occupant (12) which comprises the liquid crystal surface, or which is has an optical element with the liquid crystal surface as the optical device (24) which is integrated into a windshield (26) of the motor vehicle (10).

9. A motor vehicle (10) having a light source for emitting the light beam (16, 16 ', 16 "), a time-controlled deflection means and a control means which is adapted to an optical device (24) to drive to the optical device (24) to synchronize the optical device (24) with the time-controlled deflection device, **characterized by** the fact that for the creation of an illumination pattern (22) in a peripheral region (18), there is a control unit aligned with it and in the peripheral region (18) there is a point to be darkened (s1, s2) and to determine this point to be darkened,(s1, s2) there is a trigger time (t1,t2) for the optical device (24) as well as the current time (t) the deflecting device cyclically repeats the deflection, and to be compared to the trigger time point (t1, t2), and when the current time point (t) matches the trigger time point (t1, t2), a control signal is created for the optical device (24), wherein a transmission of a reflected part of the light beam (16, 16', 16") from the peripheral area (18) back to the vehicle occupants (12) can be blocked.

## Revendications

1. Procédé d'éclairage d'une zone environnante (18) d'un véhicule automobile (10) par une émission côté véhicule d'au moins un faisceau lumineux (16, 16', 16") sur un dispositif de déviation du véhicule automobile (10) et par une déviation commandée temporellement du faisceau lumineux (16, 16', 16") dans la zone environnante (18) du véhicule automobile (10) au moyen du dispositif de déviation afin d'éclairer toute la zone environnante (18), dans lequel le dispositif de déviation dévie le faisceau lumineux (16, 16', 16") à chaque instant prédéterminé (t) sur un point prédéterminé (s) respectif de la zone environnante (18),
**caractérisé en ce qu'**un dispositif optique (24) placé entre la zone environnante (18) et un occupant de véhicule (12) et destiné à produire un motif d'éclairage (22) prédéterminé, visible seulement pour l'occupant de véhicule (12), dans la zone environnante (18) bloque à au moins un des instants (t1, t2) une transmission d'une partie du faisceau lumineux (16, 16', 16") réfléchie de la zone environnante (18) vers l'occupant de véhicule (12) de telle sorte que chaque point associé (s1, s2) paraît non éclairé à l'occupant de véhicule (12) et les autres points lui paraissent éclairés, un dispositif de commande déterminant alors pour la production du motif d'éclairage (22) dans la zone environnante (18) un point à assombrir (s1, s2) et déterminant pour ce point à assombrir (s1, s2) un instant de déclenchement (t1, t2) pour le dispositif optique (24) ainsi que l'instant actuel (t) du dispositif de déviation qui répète cycliquement la déviation et le comparant à l'instant de déclenchement (t1, t2) et, en cas de coïncidence de l'instant actuel (t) avec l'instant de déclenchement (t1, t2), produisant pour le dispositif optique (24) un signal de commande lors duquel la transmission est bloquée.

2. Procédé selon la revendication 1, **caractérisé en ce que** le faisceau lumineux (16, 16', 16") est dévié en forme de ligne et/ou de colonne par le dispositif de déviation.

3. Procédé selon la revendication 2, **caractérisé en ce que** le dispositif de déviation est entraîné de manière quasi statique ou en résonance afin de dévier le faisceau lumineux (16, 16', 16").

4. Procédé selon l'une quelconque des revendications précédentes, **caractérisé en ce qu'**au moins un micro-miroir logé rotatif est fourni comme dispositif de déviation.

5. Procédé selon l'une quelconque des revendications précédentes, **caractérisé en ce que** le faisceau lumineux (16, 16', 16") qui est émis sur le dispositif de déviation est produit au moyen d'une diode laser bleue et d'une diode laser rouge et d'une diode laser verte.

6. Procédé selon l'une quelconque des revendications précédentes, **caractérisé en ce que** le faisceau lumineux (16, 16', 16") qui est émis sur le dispositif de déviation est produit au moyen d'une diode laser bleue, le dispositif de déviation déviant le faisceau lumineux bleu sur un élément convertisseur qui convertit le faisceau lumineux bleu en une lumière à large bande en particulier au moyen d'un matériau photoluminescent.

7. Procédé selon l'une quelconque des revendications précédentes, **caractérisé en ce que** le dispositif optique (24) bloque la transmission de la lumière au moyen d'une surface à cristaux liquides qui est intégrée dans le dispositif optique (24) et qui peut être commutée de façon électronique entre un état transparent et un état non transparent.

8. Procédé selon l'une quelconque des revendications précédentes, **caractérisé en ce que** l'on fournit comme dispositif optique (24) des lunettes pour l'occupant de véhicule (12), lesquelles lunettes comportent la surface à cristaux liquides, ou **en ce que** l'on fournit comme dispositif optique (24) un élément optique avec la surface à cristaux liquides, lequel élément optique est intégré dans un pare-brise (26) du véhicule automobile (10).

9. Véhicule automobile (10) avec une source de lumière destinée à l'émission du faisceau lumineux (16, 16', 16"), avec un dispositif de déviation commandé temporellement et avec un dispositif de commande qui est conçu pour commander un dispositif optique (24) afin de synchroniser temporellement le dispositif optique (24) avec le dispositif de déviation commandé temporellement, **caractérisé en ce que**, pour produire un motif d'éclairage (22) dans une zone environnante (18), le dispositif de commande est conçu pour déterminer un point à assombrir (s1, s2) dans la zone environnante (18) et déterminer pour ce point à assombrir (s1, s2) un instant de déclenchement (t1, t2) pour le dispositif optique (24) ainsi que l'instant actuel (t) du dispositif de déviation qui répète cycliquement la déviation et le comparer à l'instant de déclenchement (t1, t2) et, en cas de coïncidence de l'instant actuel (t) avec l'instant de déclenchement (t1, t2), produire pour le dispositif optique (24) un signal de commande lors duquel une transmission d'une partie du faisceau lumineux (16, 16', 16") réfléchie par la zone environnante (18) vers l'occupant de véhicule (12) peut être bloquée.
